# EUROPEAN PATENT SPECIFICATION

(11) **EP 1 789 522 B1**
(45) Date of publication and mention of the grant of the patent: **18.11.2009**
(21) Application number: 05749497.3
(22) Date of filing: 23.05.2005
(51) Int. Cl.: C11B 3/00, C11B 3/16, C11B 7/00, C11B 11/00

(54) **METHOD OF WAX REMOVAL FROM VEGETABLE OILS**
VERFAHREN ZUR ENTFERNUNG VON WACHS AUS PFLANZENÖLEN
PROCEDE PERMETTANT D'ELIMINER LES CIRES D'HUILES VEGETALES

(30) Priority: 28.06.2004 RU 2004119377
(43) Date of publication of application: 30.05.2007
(73) Proprietor: Tokarev, Vladimir Dmitirievich, Moscow 117534 (RU); Tokarev, Pavel Vladimirovich, Moscow 117534 (RU)
(72) Inventor: Tokarev, Vladimir Dmitirievich, Moscow 117534 (RU); Tokarev, Pavel Vladimirovich, Moscow 117534 (RU)
(74) Representative: Andrae, Steffen
(86) International application number: PCT/RU2005/000281
(87) International publication number: WO 2006/004454

(56) References cited:
- EP-A2- 0 397 233
- RU-C2- 2 215 025
- SU-A1- 1 730 129
- US-A- 4 200 509
- US-A- 4 981 620

## Description

**Field of the Invention.** This invention relates to the field of vegetable oil refining technologies, more particularly, to the technology of wax removal from vegetable oils by freezing out or winterization, and can be used for the improvement of the existing and the development of new technologies.

**Background of the Invention.** Known is a method of wax removal from vegetable oils by winterization comprising slow cooling of oils with the addition of auxiliary filtering powders used to initiate the formation of crystallization centers, low temperature exposure of oils and subsequent separation of the residue by filtering, said residue being used as forage or disposed off at special disposal sites (Fat Processing Technology, ed. Dr. Sci. Professor N.S. Arutyunyan, Moscow, Pischepromizdat, 1998, pp. 119-121 & 130-131).

Disadvantages of said method are that the auxiliary filtering powders (zeolites, kieselgur, filterperlite etc.) used to intensify the separation of waxes have a well-developed surface structure and contain internal pores and capillary channels the total volume of which may be as high as, for example, 70% of the total volume of the particles, in the case of filterperlites. This results in the high loss of oil that is absorbed by the internal pores and removed with the particles and in the high consumption of the filtering powder because only part of the particle surface is adsorbent for waxes. Furthermore, filtering powders used for this method are not recyclable, and the fatty product adsorbed by their surface cannot be disposed.

Known is a method of wax removal from vegetable oils by winterization with the use of auxiliary filtering powders (SU 1730129 A1, published 30.04.92, MPK S 11 V 3/10) wherein the used filtering powder is degreased using the technology of oil extraction from oilcake by adding to unfiltered micelle, followed by intense stinting, filtering, extraction of the separated residue and removal of said residue with the extraction cake.

Disadvantage of said method is the impossibility of recycling the degreased filtering powder in the further winterization cycles because of its contamination with the extraction cake (oilcake after oil extraction) and the high contamination of the extraction oil with the wax obtained during the subsequent distillation of the micelle, this making the oil a technical grade product only.

Known is a method of wax removal from vegetable oils comprising the introduction of a crystallization agent into the oil and the separation of the crystallizing impurities by making the use of the waxes contained in the vegetable oils, wherein the source of said waxes is the used filtering powder obtained during the winterization of the vegetable oils (SU 1822864 A1, published 23.06.93, MPK S11 V 3/10).

Disadvantage of said method from the viewpoint of used filtering powder recycling as the crystallization agent is as follows. Studies have shown that, during winterization, the waxes contained in oil form reticular colloidal structures known as globular jellies without any distinguishable crystalline structures, rather than grain aggregations. The skeleton of these globular jellies contains up to 90% of the solvent (i.e. the oil), and these jellies are readily adsorbed by the surface of filtering powders without forming multilayered coatings that are typical of crystalline structures, although the stoichiometric number of adsorbed globules per unit surface of the filtering powder is maintained. Therefore the introduction of waxes contained in vegetable oils as crystallization agents is a justified measure that may give positive result within the specified narrow limits, because the structure of the waxes being introduced is other than globular after their separation from filtering powders and concentrating.

The introduction of used filtering powders as crystallization agents within the specified narrow limits in addition to the new powders being introduced for wax structure filtering intensification purposes increases the degree of wax removal to only a little extent, mainly due to the free surface areas of the particles not occupied by the globules, this being evident from the examples presented herein. The introduction of used filtering powder hinders the separation of the phases due to the clogging of the filtering element pores, therefore multiple recycling of used filtering powders without appropriate modification of the physicochemical structure of the particle surface before recycling is impossible.

**Disclosure of the Invention.** The technical result of the invention comprises providing the possibility of multiple recycling of filtering powders during the winterization procedure with a simultaneous increase in the adsorption activity of filtering powder particles in relation to wax globules, reduction of the total powder consumption, production of concentrated wax containing fatty products directly from the used residues, and reduction of winterized oil losses due to the clogging of the inner pores of the powder particles with the wax containing fatty product.

Said technical result is achieved as follows.

Separated used filtering product regeneration step is added to the method of wax removal from vegetable oils the working cycle of which comprises winterization of the vegetable oil with the addition of auxiliary filtering powders, low temperature exposure of the oil and separation of the used filtering powder with the wax containing residue from the refined vegetable oil. To this end the used filtering powder is mixed with the additionally introduced fatty product to a paste condition, said paste is heated with stirring to the melting point of all the waxes and the resultant mixture is separated by centrifugation to obtain regenerated dry filtering powder and a wax containing fatty product.

The regenerated filtering powder can be multiply recycled as the auxiliary filtering powder in the subsequent working cycles comprising winterization of the new vegetable oil portions wherein each working cycle is followed by regeneration of the used filtering powder.

Furthermore, the separated used filtering powder is mixed with the additionally introduced fatty product in a 1 : 0.5 - 3 ratio.

Also, the mixture of the separated used filtering powder with the additionally introduced fatty product is heated with stirring to 60 - 100 °C.

Also, the separated used filtering powder is dried in a centrifuge to a residual concentration of the wax containing fatty product of 10 - 35%.

Furthermore, part of the wax containing fatty product obtained by centrifugation is mixed with the separated used filtering powder as the fatty product additionally introduced during the regeneration step.

After the regeneration, the inner pores and capillaries of the filtering powder are filled with the wax containing fatty product, and the surface of the particles is coated with a crystalline wax film having a high adsorption activity to the waxes removed from the oil during winterization. This effect increases the output of winterized oil by the volume of the clogged pores.

Because all the inner pores of filtering powder after the first use are filled with raw oil that is supplied for winterization and replaced during the regeneration by the wax containing fatty product, the wax containing fatty product separated by centrifugation during the repeated use of the regenerated filtering powder the wax concentration in which is higher by the volume of the clogged pores than that for the conventional powder. Thus, a new product grade is obtained.

### Examples.

At the Krasnodarsky Oil and Fat Factory, vegetable oil is subject to winterization after the complete cycle of food grade refinement until deodorization. Preliminarily cooled vegetable oil is fed in uninterrupted mode to the crystallizer, and Celite-545 grade kieselgur auxiliary filtering powder is fed there from a batching device in an amount of 8-15 kg per ton of the oil fed for winterization. The mixture is cooled down to 4-12°C during 4-8 h. In the exposure chamber, the waxes undergo aging, and the used filtering powder is subsequently separated with the wax containing residue on the filters. The used filtering powder unloaded from the filters is fed through the residue hopper to the heated mixer to which the wax containing fatty product from the previous regeneration phase is also fed in an amount of 1 : 0.5-2.5 as related to the amount of the used filtering powder selected within the range of values as per Claim 2 hereof. The mixture is heated with stirring to the melting point of all the waxes (75-95°C) selected within the range of values as per Claim 3 hereof, the resultant mixture is loaded into a periodic action centrifugal extractor, and the wax containing fatty product is removed by centrifugation to the dry condition of the filtering powder (residual concentration of the wax containing fatty product in the particle pores is 20-30% which is within the range of values as per Claim 4 hereof). Using a special device, the regenerated filtering powder is unloaded with slow centrifuge rotation to a cyclone from which it is fed through the batching system to the crystallizer for recycling. The wax containing fatty product separated by centrifugation is partially fed through an intermediate receiving chamber for the dilution of new portions of used filtering powder, and the remaining excess wax containing fatty product is sent to the warehouse for selling to third parties as a new grade product. The wax content in the fatty product is 15-45% depending on the composition of the oil being winterized. The method provides for a winterized oil output of 200 tons/day and allows for a 4-6-fold reduction of fresh filtering powder consumption, a 0.8-1 tons/day reduction of winterized oil losses and obtaining more than 3 tons/day of the new grade wax containing fatty product the wax content of which is 1.2-1.5 times that for direct extraction of used filtering powder.

Thus, the method provides for a tangible cost reduction of wax removal from vegetable oils, reduction of environmental pollution by the used filtering powders, increase in process output and obtaining a new grade food product.

## Claims

1. Method of wax removal from vegetable oils the working cycle of which comprises winterization of the vegetable oil with the addition of auxiliary filtering powders, low temperature exposure of the oil, separation of the used filtering powder with the wax containing residue from the refined vegetable oil and regeneration of the separated used filtering powder, to which end the used filtering powder is mixed with the additionally introduced fatty product to a paste condition, said paste is heated with stirring to the melting point of all the waxes and the resultant mixture is separated by centrifugation to obtain regenerated dry filtering powder and a wax containing fatty product, said regenerated filtering powder being multiply recycled as the auxiliary filtering powder in the subsequent working cycles comprising winterization of the new vegetable oil portions wherein each working cycle is followed by regeneration of the used filtering powder.

2. Method according to Claim 1 wherein said separated used filtering powder is mixed with the additionally introduced fatty product in a ratio of 1 : 0.5-3.

3. Method according to Claim 1 wherein said mixture of the separated used filtering powder with the additionally introduced fatty product is heated with stirring to 60 - 100 °C.

4. Method according to Claim 1 wherein said separated used filtering powder is dried in a centrifuge to a residual concentration of the wax containing fatty product of 10 - 35%.

5. Method according to Claim 1 wherein part of the wax containing fatty product obtained by centrifugation is mixed with the separated used filtering powder as the fatty product additionally introduced during the regeneration step.

## Patentansprüche

1. Verfahren zur Wachsentfernung aus Pflanzenölen, dessen Arbeitszyklus die Winterisierung des Pflanzenöls unter Zugabe von Hilfs-Filterpulvern, die Einwirkung einer niedrigen Temperatur auf das Öl, die Abtrennung des verwendeten Filterpulvers mit dem wachshaltigen Rückstand von dem raffinierten Pflanzenöl und die Regenerierung des abgetrennten verwendeten Filterpulvers umfasst, zu welchem Zweck das verwendete Filterpulver mit zusätzlich zugesetztem Fettprodukt bis zu einem Pastenzustand vermischt wird, die Paste unter Rühren bis zum Schmelzpunkt aller Wachse erhitzt wird und die resultierende Mischung durch Zentrifugieren getrennt wird, um regeneriertes trockenes Filterpulver und ein Wachs enthaltendes Fettprodukt zu erhalten, wobei das regenerierte Filterpulver mehrfach als Hilfs-Filterpulver in anschließende Arbeitszyklen zurückgeführt wird, die die Winterisierung neuer Pflanzenölportionen umfassen, wobei sich an jeden Arbeitszyklus die Regenerierung des verwendeten Filterpulvers anschließt.

2. Verfahren nach Anspruch 1, wobei das abgetrennte verwendete Filterpulver mit dem zusätzlich zugesetzten Fettprodukt in einem Verhältnis von 1:0,5-3 vermischt wird.

3. Verfahren nach Anspruch 1, wobei die Mischung des abgetrennten verwendeten Filterpulvers mit dem zusätzlich zugesetzten Fettprodukt unter Rühren auf 60 bis 100 °C erhitzt wird.

4. Verfahren nach Anspruch 1, wobei das abgetrennte verwendete Filterpulver in einer Zentrifuge bis zu einer Restkonzentration des wachshaltigen Fettprodukts von 10-35% getrocknet wird.

5. Verfahren nach Anspruch 1, wobei ein Teil des Wachs enthaltenden Fettprodukts, das durch Zentrifugieren erhalten wird, mit dem abgetrennten verwendeten Filterpulver als Fettprodukt vermischt wird, das während der Regenerationsstufe zusätzlich zugesetzt wird.

## Revendications

1. Procédé d'élimination des cires à partir d'huiles végétales, dont le cycle de travail comprend la frigélisation de l'huile végétale avec addition de poudres de filtrage auxiliaires, l'exposition de l'huile à de basses températures, la séparation de la poudre de filtrage utilisée avec le résidu contenant les cires depuis l'huile végétale raffinée et la régénération de la poudre de filtrage utilisée, séparée, où à cet effet, la poudre de filtrage utilisée est mélangée au produit gras supplémentaire en un état pâteux, ladite pâte est chauffée sous agitation jusqu'au point de fusion de toutes les cires et le mélange résultant est séparé par centrifugation pour obtenir la poudre de filtrage sèche, régénérée et un produit gras contenant les cires, ladite poudre de filtrage régénérée pouvant être recyclée de manière multiple en tant que poudre de filtrage auxiliaire dans les cycles de travail suivants, comprenant la frigélisation de nouvelles fractions d'huile végétale, où chaque cycle de travail est suivi d'une régénération de la poudre de filtrage utilisée

2. Procédé selon la revendication 1, dans lequel ladite poudre de filtrage utilisée, séparée, est mélangée au produit gras supplémentaire en un rapport de 1:0,5-3.

3. Procédé selon la revendication 1, dans lequel ledit mélange de la poudre de filtrage utilisée, séparée, et du produit gras supplémentaire est chauffé sous agitation à 60-100°C.

4. Procédé selon la revendication 1, dans lequel ladite poudre de filtrage utilisée, séparée, est séchée dans une centrifugeuse jusqu'à une concentration résiduelle du produit gras contenant les cires allant de 10 à 35%.

5. Procédé selon la revendication 1, dans lequel une partie du produit gras contenant les cires, obtenu par centrifugation, est mélangée à la poudre de filtrage utilisée, séparée, en tant que produit gras introduit de manière supplémentaire pendant l'étape de régénération.
